# EUROPÄISCHE PATENTSCHRIFT

(11) **EP 0 956 193 B1**
(45) Veröffentlichungstag und Bekanntmachung des Hinweises auf die Patenterteilung: **17.04.2002**
(21) Anmeldenummer: 97900019.7
(22) Anmeldetag: 13.01.1997
(51) Int. Cl.: B32B 5/26, B32B 27/12, B32B 31/20

(54) **THERMOPLASTISCH VERFORMBARER VERBUNDKÖRPER**
THERMOPLASTICALLY DEFORMABLE COMPOSITE BODY
CORPS COMPOSITE THERMOPLASTIQUEMENT DEFORMABLE

(43) Veröffentlichungstag der Anmeldung: 17.11.1999
(73) Patentinhaber: Quadrant Plastic Composites AG, 5600 Lenzburg (CH)
(72) Erfinder: WERTHMÜLLER, Ernst, CH-5043 Holzikon (CH)
(74) Vertreter: Patentanwälte Zellentin & Partner
(86) Internationale Anmeldenummer: IB9700011
(87) Internationale Veröffentlichungsnummer: WO9830386

(56) Entgegenhaltungen:
- EP-A- 0 146 519
- EP-A- 0 269 148
- EP-A- 0 426 158
- EP-A- 0 689 807
- EP-A- 0 747 213
- DE-A- 4 400 894
- US-A- 4 931 358
- US-A- 5 571 607
- DATABASE WPI Section Ch, Week 8822 Derwent Publications Ltd., London, GB; Class A84, AN 88-151639 XP002039712 & JP 63 092 765 A (MITSUBISHI YUKA BADISCHE KK) , 23.April 1988

## Beschreibung

Die Erfindung betrifft ein Verfahren zur Herstellung eines thermoplastisch verformbaren Verbundkörpers.

Der Verbundkörper kann als Endprodukt vorliegen oder auch als weiterverarbeitbares Halbfabrikat. Im Falle eines Endproduktes sind solche Verbundkörper beispielsweise Bauteile, die in der Automobilindustrie verwendet werden. Im Falle eines Halbfabrikates sind die Verbundkörper beispielsweise plattenförmige Erzeugnisse, die von einem Hersteller zu einem Endverbraucher geliefert werden, welcher Endverbraucher die endgültige Formgebung des angelieferten Halbfabrikates vornimmt. Als Endprodukt können als Beispiel Sitze, Behälter, Verschalungen allgemeiner Anwendung, auch für Kraftfahrzeuge genannt werden, wobei im letzteren Fall auch Stossfängerträger ein solches Endprodukt sein können.

Zur Herstellung solcher Verbundkörper sind unter anderem Schichten aus Polypropylen mit eingebetteten Glasfasern verwendet worden. Dabei tragen die Glasfasern zur Erhöhung der mechanischen Festigkeit des Verbundkörpers bei, der als solcher immer noch eine gewisse Elastizität aufweist.

Es gibt nun Anforderungen an Verbundkörper, die mit den bisher bekannten Verbundkörpern aus Polypropylen und darin eingebetteten Glasfasern nicht mehr oder nur durch erhöhten Materialeinsatz (z.B. dickere Wandungen) erreicht werden können, und weiter gibt es Anforderungen an solche Verbundkörper, die nur mit bestimmten Kombinationen von Schichten unterschiedlicher Art und auch bestimmten Verlauf mindestens eines Teiles der Glasfasern erfüllt werden können.

Ziel der Erfindung ist einen thermoplastisch verformbaren Verbundkörper zu schaffen, bei dem eine ausgezeichnete Verbindung zwischen Fasern und Kunststoff besteht und der für unterschiedliche Anforderungen technischer Art ausgebildet sein kann.

Der Gegenstand der Erfindung ist in den Ansprüchen definiert.

Es wird nachfolgend anhand der Zeichnungen näher erläutert.

Es zeigt:
Fig. 1: einen Schnitt durch einen Faserstrang, der aus einer Mischung von unterschiedlichen Einzelfasern zusammengesetzt ist;
Fig. 2: ein aus den Fasersträngen der Fig. 1 bestehendes, aus Fasersträngen nach der Fig. 1 gewobenes Fasergebilde;
Fig. 3: schematisch eine Aufsicht auf das gewobene Fasergebilde nach Fig. 2;
Fig. 4: schematisch eine Ansicht auf ein Fasergebilde, das hauptsächlich unidirektional ausgerichtete Faserstränge aufweist, wobei an einigen wenigen Stellen quer verlaufende Faserstränge angeordnet sind;
Fig. 5: schematisch eine Aufsicht auf ein Fasergebilde, bei dem die Faserstränge diagonal verlaufen;
Fig. 6-10: verschiedene Ausführungen von aus mehreren Schichten bestehenden Verbundkörpern;
Fig. 11: schematisch die Herstellung eines aus mehreren Schichten bestehenden Verbundkörpers, wobei das Bindematerial bahnförmig zugeführt wird;
Fig. 12: schematisch die Herstellung eines Verbundkörpers, wobei das Bindematerial in Form einer Schmelze zugeführt wird; und
Fig. 13: schematisch die Herstellung eines örtlich verstärkten Verbundkörpers.

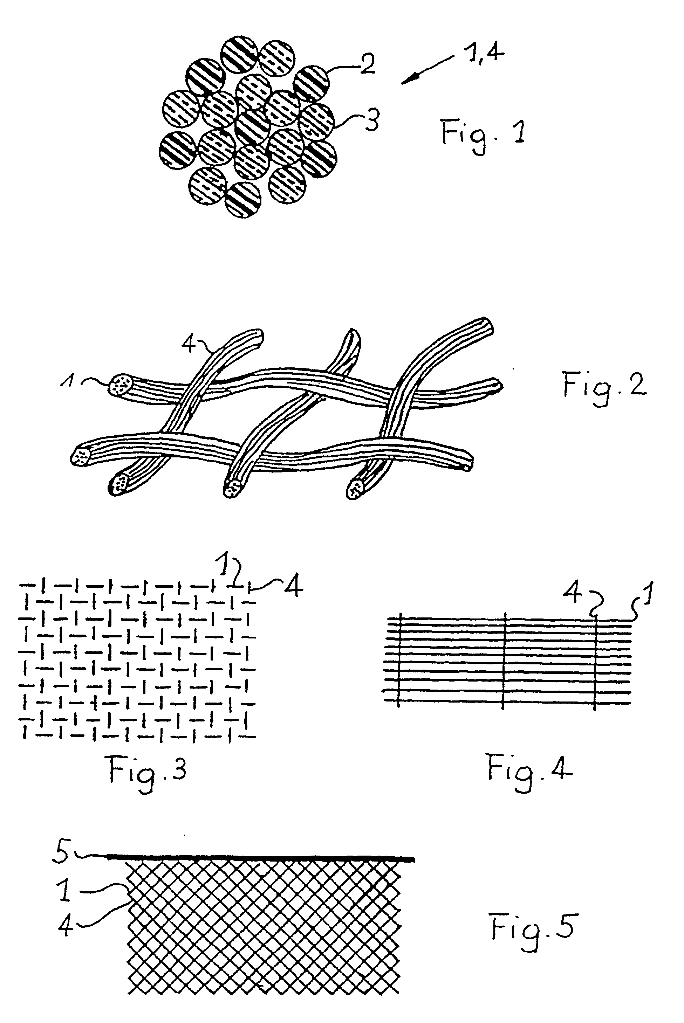

Fig. 1 zeigt einen Faserstrang 1, der aus einer Mischung aus unterschiedlichen Fasern zusammengesetzt ist. Die Faserarten unterscheiden sich grundsätzlich durch ihre Festigkeit. Eine der Faserarten, diejenige mit einer verhältnismässig niedrigen Festigkeit und mit der Bezugsziffer 2 identifiziert, besteht aus einem thermoplastischen Kunststoff, z.B. PP (Polypropylen), PET (Polyethylen-Terephthalat), PA (Polyamid), PE (Polyethylen), etc. oder aus Mischungen solcher thermoplastischen Kunststoffe.

Die andere der Faserarten, diejenige mit einer verhältnismässig hohen Festigkeit, ist mit der Bezugsziffer 3 identifiziert. Diese Faserart ist beispielsweise aus der Gruppe Glas, Kohlenstoff, Aramid, Bor, Stahl, PEEK (Polyether-Etherketon) oder PAN hochfest (Polyacrylnitril), sowie Naturfasern wie Flachs, Hanf, Sisal, Jute, Ramie, Kokos und Kenaf, wobei die genannten Stoffe auch in Form von Mischungen vorliegen können, ausgewählt. Bei der in der Fig. 1 gezeigten Ausführung sind diese Fasern 3 Glasfasern. Die Einzelfasern 2,3 eines jeweiligen Stranges 1,4 sind gemäss der EP-A-0.616 055 zum Strang vereinigt und können einen unterschiedlichen Strangaufbau aufweisen.

Die Fig. 2 zeigt, wie die Faserstränge 1,4 zu einem gesamten Fasergebilde vereinigt sind. Die Faserstränge bilden ein Gewebe, so dass eine Anzahl der Faserstränge als Kette 1 und eine weitere Anzahl als Schuss 4 vorliegt.

Die Fig. 3 zeigt schematisch einen Ausschnitt aus einem gewobenen Fasergebilde, wobei die Anzahl als Kette 1 vorhandenen Faserstränge grundsätzlich gleich der Anzahl als Schuss 4 vorhandenen Faserstränge ist.

Gemäss einer weiteren Ausführung ist die Anzahl Kette 1 bildenden Faserstränge von der Anzahl Schuss 4 bildenden Faserstränge verschieden. Dabei kann das Verhältnis Kette 1 zu Schuss 4 im Bereich 99:1 bis 1:99, vorzugsweise im Bereich von 90:10 bis 49:51 liegen. In der in Fig. 4 gezeigten Anführungsform können die als Schuss 4 bezeichneten Fasern lediglich aus nur Fasern mit der niedrigeren Festigkeit, also z.B. Polypropylen bestehen, da sie nur die Kette bildenden Faserstränge in einer ausgerichten Lage zu fixieren haben.

Eine vollständig unidirektionale Anordnung von Fasersträngen ist ebenfalls möglich.

Die Faserstränge 1,4 können auch diagonal verlaufen, d.h. mit einem Rand 5 des offensichtlich flächigen Fasergebildes einen Winkel von 45° einschliessen.

Das bis hierher beschriebene Fasergebilde ist ein Schichtgebilde, aus welchem mindestens eine der Schichten des Verbundkörpers gebildet wird. Die Anordnung der Faserstränge 1,4 hängt vom endgültigen Verwendungszweck des Verbundkörpers ab. Durch eine gezielte Anordnung der Faserstränge 1,4 kann beispielsweise erreicht werden, dass der Verbundkörper in einer ersten Richtung relativ elastisch ausbiegbar und in einer zweiten, senkrecht dazu verlaufenden Richtung relativ starr ist, wobei diese Eigenschaften grundsätzlich durch den Verlauf der Glasfasern 3, also allgemein durch den Verlauf der Einzelfasern mit der höheren Festigkeit bestimmt werden. Während der weiteren Verarbeitung zur Herstellung des Verbundkörpers schmelzen die Kunststoffasern, so dass im Verbundkörper lediglich die strangförmig angeordneten Glasfasern in ihrer ursprünglichen Form verbleiben. Folglich bestimmen die Anordnung und der Verlauf der Glasfaserstränge grösstenteils die mechanischen Eigenschaften, z.B. Biegefestigkeit des Verbundkörpers.

Faserstränge und Fasergewebe aus Polypropylen-Fasern und Glasfasern sind an sich bekannt und sind auf dem Markt erhältlich.

Der insgesamte Verbundkörper weist mindestens zwei Schichten auf, wobei eine dieser Schichten aus dem oben beschriebenen Fasergebilde mit den Glasfasersträngen gebildet wird, wie weiter unten noch detailliert beschreiben sein wird.

Die einzelnen Schichten des Verbundkörpers sind mittels einem Bindematerial miteinander homogen verbunden, welches mindestens einen thermoplastischen Kunststoff aufweist. Dieses Bindematerial kann mindestens ein Thermoplast-Homopolymer oder mindestens ein Thermoplast-Copolymer und/oder Abmischungen, bzw. Blends unterschiedlicher Schmelzviskositäten dieser Homo- und/oder Copolymere enthalten. Beispielsweise kann das Bindematerial aus der Gruppe Polyethylen, Polyamid, Polyethylenterephtalat und Polypropylen ausgewählt sein. Vergleicht man diese Kunststoffe mit den möglichen thermoplastischen Kunststoffen des Fasergebildes wird ersichtlich, dass ein homogenes Mischen und Verschmelzen zwischen den Kunststoffen erfolgen kann, wobei ein Anteil des thermoplastischen Kunststoffes des Fasergebildes selbst als Bindematerial wirken, und mindestens teilweise mit dem zugegebenen Bindematerial verschmelzen kann.

Eine weitere Schicht, die neben der aus dem beschriebenen Fasergebilde entstandenen Schicht angeordnet und mittels dem Bindematerial mit derselben verbunden ist, weist Einzelfasern auf, die in Form einer Wirrfasermatte angeordnet sind. Das Bindematerial durchtränkt die Wirrfasermatte und ist mit dem thermoplastischen Kunststoff der oben beschriebenen Schicht verschmolzen.

Die Wirrfasermatte kann je nach Ausführung aus vernadelten und/oder thermisch oder chemisch gebundenen Glasfasern bestehen, wobei Ausführungen noch zusätzliche, in einer vorgegebenen Richtung ausgerichtete unidirektionale Rovings enthalten.

Gemäss einer Ausführung werden die verschiedenen Materialien, die schlussendlich die Schichten bilden, in Form von einzelnen Bahnen einer Behandlungsstation zugeführt, so dass sie beim Eintritt in die Behandlungsstation übereinanderliegende Schichten bilden.

Zur Ausbildung einer Bahn aus einer Wirrfasermatte werden vorerst einzelne endlose oder geschnittene Glasfasern bahnförmig angeordnet und z.B. durch ein Vernadeln zur Bildung eines zusammenhängenden bahnförmigen Erzeugnisses miteinander verbunden.

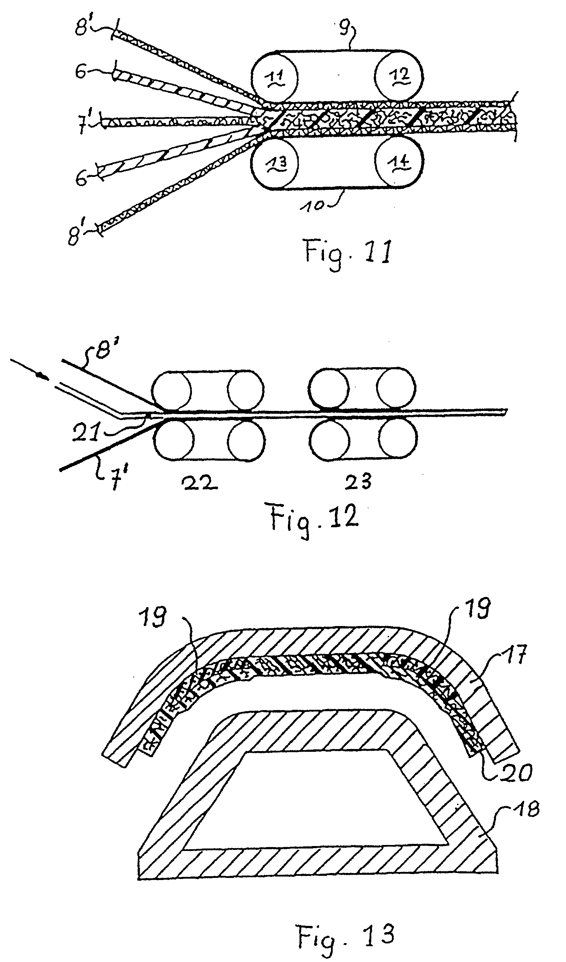

Gemäss der Ausführung nach Fig. 11 werden einer Behandlungsstation fünf zu verarbeitende Bahnen zugeführt. Die äussersten zwei Bahnen 8' bestehen aus dem Fasergebilde, dass aus zwei verschiedenen Faserarten zusammengesetzt ist, beispielsweise Glasfasern und Polypropylenfasern. Die mittlere Bahn 7' besteht aus einer Wirrfasermatte, beispielsweise aus Glasfasern. Die zwei Bahnen 6 bestehen aus dem Bindematerial, beispielsweise Polypropylen. Diese Bahnen 6,7',8' werden in eine Behandlungsstation eingeführt, die zwei endlose, um beheizte Walzen 11,12,13,14 geführte Endlosbänder 9,10 aufweist.

In der Behandlungsstation wird das zugeführte Gut unter Ausübung von Druck und Temperatur zusammengepresst. Der thermoplastische Kunststoff, (bzw. die thermoplastischen Kunststoffe) beginnt (beginnen) aufzuschmelzen und zu fliessen. Dabei durchtränkt der Kunststoff der zwei Bahnen 6 die dazwischen angeordnete Wirrfasermatte 7'. Weiter fliesst der Kunststoff der zwei Bahnen 6 in die äussersten Bahnen 8' der Fasergebilde, deren Kunststoff-Anteile ebenfalls aufgeschmolzen werden, so dass ein Verschmelzen aller Kunststoffe zum homogenen Verbinden aller Schichten (die Fasern, insbesondere Glasfasern aufweisen) entsteht. Das aus der Behandlungsstation 9-14 austretende Schichtgebilde wird in einer Kühlstation gekühlt.

Die Variante, gemäss welcher das Bindematerial in Form einer Schmelze zugeführt wird, ist schematisch in der Fig. 12 dargestellt. Bei dieser Variante werden zwei miteinander zu verbindende Bahnen zugeführt, nämlich eine Bahn 7' einer Wirrfasermatte aus z.B. Glasfasern und einer Bahn 8' aus dem Fasergebilde, das aus z.B. Glasfasern und PP-Fasern besteht. Die Schmelze aus dem Bindematerial, z.B. PP, tritt aus dem Mundstück 21 aus.

In einer ersten Behandlungsstation 22 der Anlage zur Bildung des schlussendlichen Verbundkörpers wird auf das zugeführte Gut Druck und Temperatur ausgeübt. Diese Behandlungsstation 22 entspricht der die Bauteile 9-14 enthaltenden Station nach Fig.11. Die Behandlungsstation 22 ist von einer weiteren Behandlungsstation 23 gefolgt, in welcher die nunmehr miteinander verbundenen Schichten einem Druck ausgesetzt und abgekühlt werden, um schlussendlich den Verbundkörper zu bilden.

Offensichtlich ist auch die in der Fig. 11 gezeichnete Druck/Heizstation von einer Druck/Kühlstation 23 gefolgt.

Das Schichtgebilde liegt nun als Verbundkörper vor, der in plattenförmige Stücke geschnitten werden kann, die bei einem Endverbraucher zur endgültigen Form thermoplastisch verformt werden kann. Alternativ kann das Schichtgebilde unmittelbar an der Behandlungsstation anschliessend thermoplastisch zu einem Endprodukt verformt werden, welches Endprodukt als solches jedoch wieder ein thermoplastisch verformbarer Verbundkörper ist.

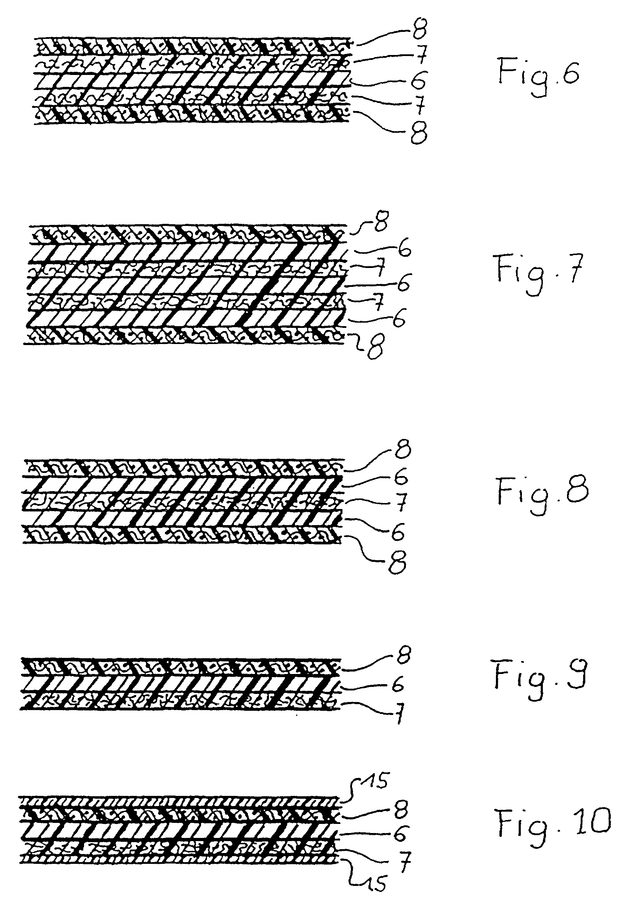

Anhand der Fig. 6-10 werden nun verschiedene Ausführungen des Erfindungsgegenstandes gezeigt. In diesen Figuren sind die einzelnen Schichten ausgeprägt dargestellt. Es ist jedoch zu bemerken, dass der gezeichnete Kunststoff. die an ihm anliegenden Schichten praktisch vollständig durchtränkt (siehe auch Fig. 11), so dass im Endprodukt möglicherweise lediglich eine extrem dünne Kunststoffschicht ohne scharfe Abgrenzungen vorhanden ist, wobei der Kunststoff homogen in die benachbarten Schichten eingedrungen ist. Weiter ist das Bindematerial, also der Kunststoff, der die Schichten durchtränkt, mit dem von der Faserbahn 8' stammenden Kunststoff verschmolzen. Die Figuren 6-10 dienen somit nur zur Erläuterung und sind nicht bindend bezüglich der relativen Schichtdicken. Weiter können die Kunststoffschichten auch Glasfasern enthalten, insbesondere wenn diese aus recycliertem Material bestehen. Die Anordnung der einzelnen Schichten der Fig. 6-10 kann als im Zustand nach dem Eintritt in eine Behandlungsstation betrachtet werden, in welcher auf die Schichten mit Wärme und Druck eingewirkt wird, um insbesondere ein Fliessen des jeweiligen als Bindematerial wirkenden Kunststoffes in die benachbarten Schichten zu bewirken.

Der Verbundkörper nach Fig. 6 weist eine mittlere, Polypropylen enthaltende Schicht 6 (Bindematerial) auf. Auf beiden Seiten dieser Polypropylen-Schicht ist je eine Wirrfasermatte 7 angeordnet, die vom Polypropylen der Schicht 6 durchdrungen ist. Jede Wirrfasermatte 7 ist von einer Schicht aus dem Faserstränge enthaltenden Fasergebilde 8 gefolgt.

Die Herstellung des Verbundkörpers nach Fig. 6 und allgemein des Verbundkörpers nach den Figuren 6-10 erfolgt grundsätzlich in der Weise, die unter Bezugnahme auf Fig. 11 und 12 beschrieben worden ist, in welcher die Herstellung eines Verbundkörpers schematisch dargestellt ist, der eine "mittlere" Schicht aus einem Wirrfaservlies 7, beidseitig gefolgt von einer "Schicht Polypropylen" 6 und zwei "äussersten Schichten" des Fasergebildes 8 aufweist.

Fig. 7 zeigt eine Ausführung, die eine mittlere Schicht 6 aus Polypropylen aufweist, die zwischen Wirrfasermatten 7 angeordnet ist, welche Wirrfasermatten 7 von jeweils einer weiteren Schicht 6 aus Polypropylen gefolgt sind. Die äussersten zwei Schichten 8 sind Fasergebilde-Schichten. Es ist ersichtlich, dass die mittlere Polypropylen-Schicht 6 grundsätzlich zum homogenen Verbinden und Durchtränken der zwei Wirrfasermatten 7 dient, und die zwei anderen Polypropylen-Schichten 6 zum homogenen Durchtränken der Wirrfasermatten 7 und Verschmelzen mit dem Kunststoff der Fasergebilde-Schichten 8 (die ihrerseits verschmelzende Fasern aus einem thermoplastischen Kunststoff enthalten). Es ist ersichtlich, dass nach dem Aufschmelzen, Fliessen und wieder Erstarren des Polypropylens eine homogene Verbindung aller Schichten des Verbundkörpers erreicht ist.

Fig. 8 zeigt eine Anordnung mit einer mittig angeordneten Wirrfasermatte 7, die zwischen zwei Polypropylenschichten 6 angeordnet ist. Die zwei äussersten Schichten 8 sind durch das Fasergebilde gebildet. Auch hier findet bei der Herstellung ein Durchtränken der Wirrfasermatten 7 und ein Verschmelzen mit dem Kunststoff der Schichten 8 statt.

Fig. 9 zeigt eine Ausführung mit einer Wirrfasermatte 7, einer Fasergebilde-Schicht 8, und einer dazwischen liegenden Polypropylen-Schicht 6. Dazu muss bemerkt werden, dass die zwei Fasergebilde-Schichten 8 nicht unbedingt identisch ausgebildet sein müssen. Beispielsweise könnte die obere Fasergebilde-Schicht 8 gemäss der Ausführung nach Fig. 3 und die untere Fasergebilde-Schicht 8 gemäss der Ausführung nach Fig. 4 ausgebildet sein, so dass ein festgelegter Verlauf der Glasfaserstränge der Schicht 8 vorhanden ist.

Das Schichtgebilde nach Fig. 10 entspricht dem Aufbau nach grundsätzlich dem Schichtgebilde nach Fig. 9. Jedoch ist als zusätzliche Massnahme auf der äussersten Seite jeweils eine dünne Polypropylen-Schicht 15 angeordnet. Bei der Herstellung dieser Ausführung, vergleiche mit Fig. 12, werden aussen zusätzlich dünne Polypropylen-Bahnen 15 zugeführt. Mittels diesen zusätzlichen Polypropylen-Bahnen 15 wird von aussen her zusätzlich als Bindematerial dienendes Polypropylen (bei anderen Ausführungen offensichtlich ein anderer thermoplastischer Kunststoff, bzw. ein anderes Kunststoff-Blend) den miteinander zu verbindenden Schichten zur homogenen Durchtränkung derselben zugegeben.

Bei den Ausführungen, bei welchen zwischen die miteinander zu verbindenden Schichten eine Polypropylen-Schmelze eingebracht wird, weist diese Schmelze ein MFI (Melt-Flow-Index) im Bereich von 12 bis 800 auf.

Dieser MFI-Bereich ist auch im Falle eines Gemisches von Schmelzen unterschiedlicher Viskosität zutreffend. Falls notwendig, können einer jeweiligen Schmelze an sich bekannte Additive zum Erreichen des genannten MFI-Bereiches zugegeben werden.

Weiter können der Schmelze an sich bekannte Stabi lisatoren zum Wärme-, UV- und Alterungsschutz zugegeben sein. Auch können ebenfalls an sich bekannte Additive zur Verbesserung der Haftung zwischen der Schmelze und den Glas-, bzw. Naturfasern der Schmelze zugegeben sein.

Bei der Weiterverarbeitung des Verbundkörpers fällt z.B. durch Schneiden Abfallmaterial an. Dieses Abfallmaterial wird wiederverwendet, d.h. recycliert, wozu es gemahlen wird, so dass Körner aus Polypropylen und kurzen Glasfasern erhalten werden, die zur Bildung der Schmelze mit neuem Polypropylen vermischt werden. Der Anteil der recyclierten Polypropylen-Glasfaserlaminat-Phase kann dabei im Bereich von 5-95 Gew.% bezogen auf das gesamte Gemisch liegen, oder 100 Gew.% der als Schmelze zugeführten Schicht betragen.

Der gemäss den obigen Ausführungen hergestellte thermoplastisch verformbare Verbundkörper wird in einem mindestens eine Matrize 17 und mindestens eine Patrize 18 aufweisenden Formwerkzeug zu einem geformten Bauteil verarbeitet. Dazu wird ein Zuschnitt des Verbundkörpers erwärmt und in das Formwerkzeug gelegt, das Formwerkzeug geschlossen, so dass aus dem Zuschnitt der Bauteil geformt wird.

Es wird nun Bezug auf die Figur 13 genommen. Der Verbundkörper kann gemäss einer weiteren Ausführung als örtlich verstärkter Bauteil ausgebildet werden.

Es sei angenommen, dass ein Stossfängerträger für ein Kraftfahrzeug hergestellt werden soll, der bei den durch mögliche auftretende Belastungen durch Aufprallen auf Hindernisse besonders beanspruchten Bereichen verstärkt ist. Dazu wird im Formwerkzeug, das die schematisch gezeichneten Formteile 17 und 18, also Matrize und Patrize aufweist, bei den zu verstärkenden Stellen des Endproduktes ein Stück eines Verbundkörpers nach den Ausführungen gemäss Fig. 6-10 angeordnet. Über diese örtlich begrenzte(n) Schicht(en) 19 wird eine GMT-Matte 20 (Glasfaserverstärktes Polypropylen) d.h. eine mit Polypropylen vollständig getränkte Glasfasermatte in den Formteil 17 gelegt. Dabei wird die Schicht eines hier mit der Bezugsziffer 19 bezeichneten Verbundkörpers, zweckmässigerweise vor dem Einlegen in die Formteile 17,18 aufgeheizt und dadurch das als Bindematerial vorhandene Polypropylen bereits aufgeschmolzen. Dieses Vorgehen erlaubt ein schnelles Herstellen des Endproduktes. Danach werden die Formteile 17,18 gegeneinander bewegt, d.h. die Form wird geschlossen, und durch Wärme und Druck ein Zusammenschmelzen der Schichten 19 und 20 bewirkt. Der Verbundkörper 19 bleibt an der vorgegebenen Stelle. Die GMT-Matte 20, d.h. das mit Polypropylen durchtränkte Wirrfaservlies kann aber aufgrund des einwirkenden Druckes der Formteile 17,18 fliessen und nimmt die endgültige Form des Endproduktes an. Nach dem Abkühlen und Entformen erhält man einen Stossfänger für ein Kraftfahrzeug, der örtlich verstärkte Bereiche aufweist.

## Patentansprüche

1. Verfahren zur Herstellung eines thermoplastisch verformbaren Verbundkörpers, der
- mindestens eine erste Schicht (8) eines aus zwei Phasen bestehenden Schichtgebildes aufweist, wobei die erste Phase eine Vielzahl Einzelfasern (3) mit verhältnismässig hoher Festigkeit und die zweite Phase einen thermoplastischen Kunststoff mit verhältnismässig niedriger Festigkeit enthält, und wobei die Einzelfasern (3) in der Schicht (8) in Form von unidirektionalen Fasersträngen oder als Gewebe aus Fasersträngen angeordnet sind, und
- mindestens eine zweite Schicht (7) aufweist, die Einzelfasern mit verhältnismässig hoher Festigkeit enthält, welche in Form eines Wirrvlieses angeordnet sind,
welche Schichten mittels eines als Bindematerial (6) dienenden thermoplastischen Kunststoffs miteinander verbunden sind, der die Einzelfasern der zweiten Schicht (7) umhüllt, in derselben homogen verteilt ist und mit dem thermoplastischen Kunststoff der ersten Schicht (8) verschmolzen ist,
wobei um die übereinanderliegenden Schichten (7, 8) zu bilden, mindestens eine Bahn (8') aus die Einzelfasern (3) verhältnismäßig hoher Festigkeit enthaltenden Fasersträngen und mindestens eine Bahn (7') aus Wirrfaservlies zusammengeführt werden, und auf mindestens eine dieser Bahnen eine Bahn des als Bindematerial (6) dienende thermoplastischen Kunststoffs aufgebracht wird,
und wobei in einem kontinuierlichen Vorgang
- in einem ersten Schritt die Faserbahnen mit dem Bindematerial erwärmt und einem Druck ausgesetzt werden, damit das Bindematerial aufschmilzt, die nicht aufgeschmolzenen Fasern der Faserbahnen umhüllt und sich homogen verteilt, und
- in einem zweiten Schritt unter Druck abgekühlt wird, so dass sich die Schichten zu einem kompakten Verbundmaterial verfestigen,
**dadurch gekennzeichnet, dass** die Faserstränge der Bahn(en) (8'), aus denen die erste(n) Schicht(en) (8) entstehen sollen, aus einer Mischung von unterschiedlichen Fasern zusammengesetzt sind, wobei die erste Faserart (3) eine verhältnismässig hohe Festigkeit und die zweite Faserart (2) eine verhältnismässig niedrige Festigkeit aufweist und aus einem themoplastischen Kunststoff besteht, der beim Erwärmen aufschmilzt und sich mit dem thermoplastischen Kunststoff des Bindematerials(6) vermischt.

2. Verfahren nach Anspruch 1, **dadurch gekennzeichnet, dass** die Einzelfasern der ersten Schicht (8) und der zweiten Schicht (7) Glasfasern sind.

3. Verfahren nach Anspruch 1, **dadurch gekennzeichnet, dass** die thermoplastischen Kunststoffe der ersten Schicht (8) und des Bindematerials (6) jeweils Polypropylen sind.

4. Verfahren nach Anspruch 1, **dadurch gekennzeichnet, dass** das Bindematerial (6) ein Recyclat aus Polypropylen mit eingebetteten Glasfasern enthält.

5. Verfahren nach Anspruch 1, **dadurch gekennzeichnet, dass** die Faserstränge der Schicht (8) in Form eines Gewebes mit Kette (1) und Schuss (4) angeordnet sind, wobei die die Kette bildenden Stränge aus Einzelfasern mit verhältnismässig hoher Festigkeit bestehen und mindestens annähernd rechtwinklig zu den den Schuss bildenden Strängen aus Einzelfasern mit verhältnismässig niedriger Festigkeit verlaufen, und das Verhältnis der Anzahl der den Schuss bildenden Stränge im Bereich von 99:1 bis 1:99, vorzugsweise im Bereich von 90:10 bis 49:51, liegt.

6. Verfahren nach Anspruch 1, **dadurch gekennzeichnet, dass** ein granulat- oder pulverförmiger Bindematerial-Rchstoff aufgeschmolzen und das Bindematerial den jeweiligen Bahnen in Form einer Schmelze zugeführt wird.

7. Verfahren nach Anspruch 1, **dadurch gekennzeichnet, dass** der als Bindematerial dienende Kunststoff in Form einer Schmelze eines thermoplastischen Kunststoffes oder eines Gemisches aus Schmelzen verschiedener thermoplastischer Kunststoffe zugegeben wird, und dass das schmelzflüssig zugegebene Bindematerial eine Schmelzviskosität 12<MFI<800 aufweist, in welcher Schmelze Stabilisatoren zum Wärme, US- und Alterungsschutz enthalten sind.

8. Verfahren nach Anspruch 7, **dadurch gekennzeichnet, dass** die Schmelze zusätzlich Additive zur Verbesserung der Haftung zwischen derselben und den Einzelfasern enthält.

9. Verfahren nach Anspruch 1, **dadurch gekennzeichnet, dass** das Bindematerial in Form einer Schmelze zugegeben wird, und dass zur Bildung der Schmelze ein neu hergestellter, körniger thermoplastischer Kunststoff mit einem gemahlenen, neu hergestellten oder recyclierten thermoplastischen Kunststoff-Glasfaserlaminat vermischt und das Gemisch geschmolzen wird, wobei das Gewichtsanteil der thermoplastischen Kunststoff-Glasfaserlaminat-Phase im Bereich von 5 bis 96 Gew.-% bezogen auf das gesamte Gewicht liegt.

10. Verfahren nach Anspruch 1, **gekennzeichnet durch** eine mittlere, Polypropylen enthaltende Bindematerialschicht (6), die zwischen zwei Schichten (7) angeordnet ist, die ihrerseits von jeweils einer Schicht (8) gefolgt sind, wobei die einzelnen Schichten **durch** das Polypropylen homogen verbunden sind.

11. Verfahren nach Anspruch 1, **gekennzeichnet durch** eine mittlere, Polypropylen enthaltende Bindematerialschicht (6), die zwischen zwei Schichten (7) angeordnet ist, die ihrerseits von einer weiteren Polypropylen enthaltenden Bindematerialschicht (6) gefolgt sind, welche Bindematerialschichten von jeweils einer Schicht (8) gefolgt sind, wobei die einzelnen Schichten **durch** das Polypropylen homogen verbunden und die Einzelfasern des Wirrvlieses der Schichten (7) mindestens teilweise durchtränkt sind.

12. Verfahren nach Anspruch 1, **gekennzeichnet durch** eine mittlere Schicht (7), die zwischen zwei Polypropylen enthaltenden Bindematerialschichten (6) angeordnet ist, die ihrerseits von jeweils seiner Schicht (8) gefolgt ist, wobei die einzelnen Schichten **durch** das Polypropylen homogen verbunden und die Einzelfasern des Wirrvlieses der Schichten (7) mindestens teilweise durchtränkt sind.

13. Verfahren nach Anspruch 1, **dadurch gekennzeichnet, dass** der Verbundkörper auf beiden Seiten eine äussere Schicht aus Polypropylen aufweist, wobei die darunter angeordnete Schicht von dem Polypropylen durchtränkt ist.

## Claims

1. Method of producing a thermoplastically deformable composite body which
- includes at least one first layer (8) of a layer structure consisting of two phases, whereby the first phase contains a plurality of single fibers (3) with a relatively high strength and the second phase a thermoplastic plastic material with a relatively low strength, and whereby the single fibers (3) in the layer (8) are arranged in form of unidirectional fiber strands or as a weaving of fiber strands, and
- includes at least a second layer (7) which contains the single fibers with a relatively high strength which are arranged in form of a felted fleece,
which layers are bonded to each other by means of a thermoplastic plastic material serving as bonding material (6) which encases the single fibers of the second layer (7), is distributed homogeneously in same and is intermelted with the thermoplastic plastic material of the first layer (8),
whereby in order to form the superimposed layers (7,8) at least one web (8') of fiber strands containing the single fibers (8) of a relatively high strength and at least one web (7') of felted fleece are brought together and a web of the thermoplastic plastic material serving as bonding material (6) is placed onto at least one of these webs, and whereby in a continuous procedure
- in a first step the fiber webs with the bonding material are heated and subjected to a pressure so that the bonding material melts, encases the not melted fibers of the fiber webs and distributes itself homogeneously, and
- in a second step a cooling under pressure is performed so that the layers harden into a compact composite material,
**characterized in that** the fiber strands of the web(s) (8'), from which the first layer (8) shall be produced are composed of a mixture of different fibers, whereby the first kind of fibres (3) features a relatively high strength and the second kind of fibers (2) features a relatively low strength, and consists of a thermoplastic plastic material which melts upon heating and mixes with the thermoplastic plastic material of the bonding material (6).

2. Method according to claim 1, **characterized in that** the single fibers of the first layer (8) and of the second layer (7) are glass fibers.

3. Method according to claim 1, **characterized in that** the thermoplastic plastic materials of the first layer (8) and of the bonding (6) both are polypropylene.

4. Method according to claim 1, **characterized in that** the bonding material (6) contains a recycled material of polypropylene and embedded glass fibers.

5. Method according to claim 1, **characterized in that** the fiber strands of the layer (8) are arranged in form of a weaving with warp (1) and weft (4), whereby the strands which form the warp (1) consist of single fibers with a relatively high strength and extend at least approximately perpendicularly to the strands of single fibers with a relative low strength forming the weft, and that the relation of the number of the strands forming the weft in the range from 99:1 to 1:99, preferably in the range 90:10 to 49:51.

6. Method according to claim 1, **characterized in that** a granulate or powder like bonding material raw material is melted and the bonding material is fed to the respective webs in form of a melt.

7. Method according to claim 1, **characterised in** the plastic material serving as bonding material is added in form of a melt of a thermoplastic plastic material or of a mixture of melts of differing thermoplastic plastic materials, and that the bonding material added in a melted state features a melt viscosity 12<MFI<800, which melt includes stabilisers as heat, UV and ageing protection.

8. Method according to claim 7, **characterized in that** the melt includes additionally additives for improvement of the adhering between same and the single fibers.

9. Method according to claim 1, **characterized in that** the bonding agent is added in form of a melt, and that for producing the melt a newly produced, granulate like thermoplastic plastic material is mixed with a ground, newly produced or recycled thermoplastic plastic material-glass fiber laminate and the mixture is melted, whereby the portion by weight of the thermoplastic plastic material - glass fiber laminate phase is in the range of 5 to 96% by weight in relation to the total weight.

10. Method according to claim 1, **characterized by** a centre bonding material layer (6) containing polypropylene, which is arranged between two layers (7), which in turn are each followed by a layer (8), whereby the individual layers are bonded together homogeneously by the polypropylene.

11. Method according to claim 1, **characterized by** a center bonding material layer (6) containing polypropylene which is located between two layers (7) which in turn are followed by a further bonding material layer containing polypropylene, which bonding material layers each are followed by a layer (8), whereby the individual layers are homogeneously bonded by the polypropylene and the single fibers of the felted fleece of the layers (7) are at least in part impregnated.

12. Method according to claim 1, **characterized by** a center layer (7) which is located between two bonding material layers (6) containing polypropylene, which in turn are each followed by a layer (8), whereby the individual layers are homogeneously bonded by the polypropylene and the single fibers of the felted fleece of the layers (7) are at least in part impregnated.

13. Method according to claim 1, **characterized in that** the composite body comprises at both sides a outer layer of polypropylene, whereby the layer located thereunder is impregnated bay the polypropylene.

## Revendications

1. Procédé pour la fabrication d'un corps composite apte à une déformation thermoplastique, ledit corps composite présentant
- au moins une première couche (8) d'un produit stratifié constitué par deux phases, dans laquelle la première phase contenant une multitude de fibres individuelles (3) manifestant une résistance relativement élevée et la deuxième phase contenant une matière synthétique thermoplastique manifestant une résistance relativement faible, et dans laquelle les fibres individuelles (3) dans la couche (8) sont disposées sur la forma d'écheveaux unidirectionnels ou sous la forma d'un tissu constitué par des écheveaux de fibres, et
- au moins une deuxième couche (7) qui contient des fibres individuelles manifestant une résistance relativement élevée, qui sont disposées sous la forma d'un non-tissé emmêlé,
lesdites couches étant reliées l'une à l'autre à l'aide d'une matière synthétique thermoplastique faisant office de matière de liaison (6), qui enveloppe les fibres individuelles de la deuxième couche (7), qui est répartie de manière homogène dans ladite couche et qui est soumise à une fusion conjointe avec la matière synthétique thermoplastique de la première couche (8),
dans lequel, pour former les couches superposées (7, 8), on réunit au moins une bande (8') constituée par des écheveaux de fibres contenant les fibres individuelles (3) manifestant une résistance relativement élevée et au moins une bande (7') constituée d'un non-tissé emmêlé, et on applique, sur au moins une de ces bandes, une bande constituée de la matière synthétique thermoplastique faisant office de matière de liaison (6),
et dans lequel, dans un processus en continu,
dans une première étape, on chauffe les bandes de fibres avec la matière de liaison et on les soumet à une pression, de telle sorte que la matière de liaison entre en fusion, enveloppe les fibres des bandes de fibres qui ne sont pas entrées en fusion et se répartit de manière homogène, et
dans une deuxième étape, on refroidit sous pression de telle sorte que les couches se solidifient pour obtenir une matière composite compacte,
**caractérisé en ce que** les écheveaux de fibres de la ou des bandes (8'), à partir desquelles on doit obtenir la ou les premières couches (8), sont composés d'un mélange de différentes fibres, le premier type de fibres (3) présentant une résistance relativement élevée et le deuxième type de fibres (2) présentant une résistance relativement faible et étant constitué d'une matière synthétique thermoplastique qui entre en fusion lorsqu'on la chauffe et qui se mélange avec la matière synthétique thermoplastique de la matière de liaison (6).

2. Procédé selon la revendication 1, **caractérisé en ce que** les fibres individuelles de la première couche (8) et de la deuxième couche (7) sont des fibres de verre.

3. Procédé selon la revendication 1, **caractérisé en ce que** les matières synthétiques thermoplastiques de la première couche (8) et de la matière de liaison (6) représentent respectivement du polypropylène.

4. Procédé selon la revendication 1, **caractérisé en ce que** la matière de liaison (6) contient un produit de recyclage constitué de polypropyléne dans lequel sont incorporées des fibres de verre.

5. Procédé selon la revendication 1, **caractérisé en ce que** les écheveaux de fibres de la couche (8) sont disposés sous la forme d'un tissu comportant une chaîne (1) et une trame (4), les écheveaux formant la chaîne étant constitués par des fibres individuelles présentant une résistance relativement élevée et s'étendant ou moins approximativement à angle droit par rapport aux écheveaux de fibres individuelles présentant une résistance relativement faible et formant la trame, le rapport du nombre des écheveaux qui forment la trame se situant dans le domaine de 99 : 1 à 1 : 99, de préférence dans le domaine de 90 : 10 à 49 : 51.

6. Procédé selon la revendication 1, **caractérisé en ce qu'**on porte à fusion une matière brute sous forme d'un produit de granulation ou sous forme pulvérulente constituant la matière de liaison et on amène la matière de liaison aux bandes respectives sous la forme d'une masse fondue.

7. Procédé selon la revendication 1, **caractérisé en ce qu'**on ajoute la matière synthétique faisant office de matière de liaison, sous la forma d'une masse fondue d'une matière synthétique thermoplastique ou sous la forma d'un mélange de masses fondues de différentes matières synthétiques thermoplastiques, et **en ce que** la matière de liaison ajoutée à l'état fondu présente une viscosité en fusion de 12 < MFI < 800, des stabilisateurs pour conférer une protection contre l'effet de la chaleur, du rayonnement ultraviolet et du vieillissement étant contenus dans ladite ou lesdites masses fondues.

8. Procédé selon la revendication 7, **caractérisé en ce que** la masse fondue contient en outre des additifs pour améliorer l'adhérence entre la première citée et les fibres individuelles.

9. Procédé selon la revendication 1, **caractérisé en ce que** la matière de liaison est ajoutée sous la forma d'une masse fondue et **en ce que**, pour la formation de la masse fondue, on mélange une matière synthétique thermoplastique en grains, fraîchement préparée avec un stratifié de matière synthétique thermoplastique - fibres de verre broyé, fraîchement préparé ou recyclé, et on porte le mélange à fusion, la fraction pondérale de la phase de stratifié de matière synthétique thermoplastique - fibres de verre se situant dans le domaine de 5 à 96 % en poids, rapportés au poids total.

10. Procédé selon la revendication 1, **caractérisé par** une couche médiane (6) faisant office de matière de liaison et contenant du polypropylène, qui est disposée entre deux couches (7) qui sont suivies, pour leur part, par respectivement une couche (8), les couches individuelles étant reliées de manière homogène par le polypropylène.

11. Procédé selon la revendication 1, **caractérisé par** une couche médiane (6) faisant office de matière de liaison et contenant du polypropylène, qui est disposée entre deux couches (7) qui sont suivies, pour leur part, par une couche supplémentaire (6) faisant office de matière de liaison et contenant du polypropylène, lesdites couches faisant office de matière de liaison étant respectivement suivies par une couche (8), les couches individuelles étant reliées de manière homogène par le polypropylène et les fibres individuelles du non-tissé emmêlé des couches (7) étant imprégnées au moins en partie.

12. Procédé selon la revendication 1, **caractérisé par** une couche médiane (7) qui est disposée entre deux couches (6) faisant office de matière de liaison et contenant du polypropylène, qui sont suivies, pour leur part, par respectivement une couche (8), les couches individuelles étant reliées de manière homogène par le polypropylène et les fibres individuelles du non-tissé emmêlé des couches (7) étant imprégnées au moins en partie.

13. Procédé selon la revendication 1, **caractérisé en ce que** le corps composite présente, de part et d'autre, une couche externe constituée de polypropyléne, la couche sous-jacente étant imprégnée avec le polypropylène.
